# EUROPEAN PATENT SPECIFICATION

(11) **EP 4 111 287 B1**
(45) Date of publication and mention of the grant of the patent: **08.10.2025**
(21) Application number: 21714340.3
(22) Date of filing: 24.02.2021
(51) Int. Cl.: G05D 1/00, G01C 21/16, G01C 21/20

(54) **VESSEL STATION MAINTENANCE CONTROL SYSTEM AND METHOD OF MAINTAINING STATION FOR A VESSEL**
SCHIFFSSTATIONSWARTUNGSSTEUERUNGSSYSTEM UND VERFAHREN ZUR WARTUNG EINER STATION FÜR EIN SCHIFF
SYSTÈME DE COMMANDE DE MAINTENANCE DE STATION DE BATEAU ET PROCÉDÉ DE MAINTIEN DE STATION POUR UN BATEAU

(30) Priority: 24.02.2020 GB 202002575
(43) Date of publication of application: 04.01.2023
(73) Proprietor: Sonardyne International Limited, Yateley, Hampshire GU46 6GD (GB)
(72) Inventor: CHIBAH, Malik, Guildford Surrey GU2 7RT (GB)
(74) Representative: Kay, Ross Marcel
(86) International application number: PCT/GB2021/050448
(87) International publication number: WO 2021/170993

(56) References cited:
- EP-A1- 2 161 542
- US-A1- 2013 185 020

## Description

The present invention relates to a vessel maintenance control system of the type that, for example, comprises independent position reference systems for controlling station of a vessel. The present invention also relates to a method of maintaining station, the method being of the type that, for example, comprises generating positions using independent position reference systems for controlling station of a vessel.

Unsurprisingly, when at sea, wind, waves and water currents can act on a vessel to influence the position of the vessel. For many applications, the vessel is required to maintain a position and heading for a prolonged or brief period of time, i.e. to keep station, such as cable laying, surveys, floating production and offloading vessels, drillships, and platform supply vessels, to name but a few. In this regard, "TRINAV EXPRESS - A DGPS Position Reference for Deep Water Drilling Rigs" (C. Rypdal, ION GPS 2000, 19 - 22 September 2000, Salt Lake City, UT) explains that, in the context of semi-submersible drilling rigs, so-called "drift off" of a drilling rig can lead to severe damage to a drill-string and very considerable expense.

Dynamic Positioning (DP) by the vessel is the ability of the vessel to maintain station in a body of water when forces are acting upon the vessel to move the vessel off station. The International Maritime Organisation (IMO) provides guidelines for vessels with DP systems, for example as set out in MSC/circ. 645, 6 June 1994. Other bodies have similar guidelines, for example the American Bureau for Shipping (ABS), but which are structured in line with the IMO guidelines. The "rules" for so-called "Class 3" DP set out in the IMO guidelines require 3 independent position reference systems to be used. The position reference systems are typically selected from: a GNSS, a taut-wire system, a hydroacoustic positioning reference system, and gyroscopes. However, in some environments, certain DP position reference systems cannot be used, for example in shallow water, where use of a taut-wire system as a source of DP reference data is not always possible. Similarly, where the vessel has to move regularly to a new position and temporarily keep station, use of an acoustic position reference system as one of the sources of reference data is impractical as the acoustic beacons would have to be recovered and re-deployed with an undesirably impractical frequency, reducing the efficiency in carrying out the activity for which the vessel has been deployed. Furthermore, in addition to having limited depth capability and/or being of limited desirability, some systems such as taut-wire systems and Doppler velocity loggers have limited accuracy, maintenance issues and require substantial deck space.

It is also known to employ laser ranging systems as well as traditional radar as a source of DP reference data. However, some environments lack or have limited reflective targets and responders required for laser and radar ranging systems.

EP-A1-2 161 542 describes a dynamic positioning system comprising a plurality of position measuring equipment providing position data, and an inertial navigation system. The system uses data provided by at least one of the plurality of position measuring equipment and data provided by the INS to derive an estimate of the position or speed of a vessel. However, Global Positioning System (GPS) data is required for the inertial navigation system, because most inertial navigation systems require an absolute positioning instrument for aiding, and the dynamic positioning system described risks inadvertent activation of thrusters and/or false alarms due to a disagreement between the reference data of the GPS reference and the inertial navigation system reference. Furthermore, the provision of an additional source of GNSS data to serve the inertial navigation constitutes an additional expense. More importantly though, in a DP system already employing one or even two GNSS position references, use of an instrument that is dependent upon GNSS data does not truly satisfy the robustness requirement of dynamic positioning guidelines, because in the event that the accuracy of GNSS position reference data degrades or even the GNSS reference data becomes unavailable due to environmental conditions, the accuracy of the inertial navigation system would also be compromised due to the dependence of the inertial navigation system on a source of GNSS data. European patent publication no. EP 2 161 542 A1 describes a dynamic positioning system comprising an inertial navigation system unit dynamically switchable to different position measurement equipment.

Inertial navigation systems aided by Doppler velocity log (or other) data are known to provide enhanced accuracy by using doppler velocity log observations to reduce the position errors in the inertial navigation system. Typically this is performed using algorithmically loose coupling where the DVL computes a combined velocity from all beams or transducers. However, such devices are not employed as independent references in dynamic positioning systems owing to the accuracy and integrity of such inertial navigation systems being inadequate for dynamic positioning applications, which require accurate position data in order to avoid costly errors. Indeed, such instruments provide absolute position data and so require a source of regular GNSS data. Additionally, a dynamic positioning monitoring desk of a dynamic positioning system requires information prominence and inertial navigation systems lack the requisite alarms and specific output messages required for compliant use in dynamic positioning systems. Furthermore, typical deployment of the inertial navigation system is via a pivoting arm on a vessel, which vibrates and potentially corrupts measurements made. Also, in very shallow water environments, the length of the arm/pole has to be restricted, which may not be possible and lead to practical deployment impediments.

As mentioned above, the above-described types of inertial navigation system require regular provision of position data from another source, typically a GNSS system, in order to maintain a semblance of accuracy. However, a so-called "loosely coupled" DVL-aided INS requires regular aiding with GNSS data for a dynamic positioning application. In this regard, if GNSS data from a GNSS reference is used as one of the independent references, this GNSS data cannot be used to provide the feed of GNSS data required to maintain accuracy of the DVL-aided INS instrument, otherwise the GNSS reference and the inertial navigation systems would not constitute independent references and so would not be, for example, DP 3 compliant. Furthermore, even if used with GNSS data as an input, assuming such a separate source of GNSS data were available for independence purposes, if the inertial navigation system is provided with an incorrect, or slightly inaccurate, GNSS location, the position output data of the inertial navigation system would conflict with the absolute position data provided by the independent GNSS reference and so an unacceptable risk exists that thrusters erroneously activate and/or a false alarm is generated on the dynamic positioning desk. Additionally, if not provided with the GNSS data, the inertial navigation systems described above would suffer from an unacceptably large drift in position estimation over a short space of time, making the inertial navigation system wholly unacceptable for use as an independent position reference. It should also be appreciated that, under constant use, it the instrument would, undesirably, be subject to fouling.

According to a first aspect of the present invention, there is provided a vessel station maintenance control system comprising: a first position reference system configured to generate first position data; a second position reference system configured to generate second position data; a third position reference system configured to generate third position data; and a controller operably coupled to the first, second and third position reference systems, the controller being configured to identify a position deviation from at least two of the first, second and third position data, and to generate a vessel movement correction command in response to determination that the position deviation is an unwanted position deviation; the first, second and third position reference systems are operationally independent of each other; characterised in that: the first position reference system is an acoustically aided inertial dead reckoning navigation system comprising an inertial measurement unit co-located with and operably coupled to a Doppler velocity log measurement unit, the Doppler velocity log measurement unit being configured to generate raw acoustic observation data; the acoustically aided inertial dead reckoning navigation system is configured to use the raw acoustic observation data to improve accuracy of position estimates calculated by the inertial measurement unit; and the acoustically aided inertial dead reckoning system further comprises: an Error State Kalman filter; a difference calculator; and a sensor model unit coupled to a first input of the difference calculator; wherein the Doppler velocity log measurement unit is coupled to a second input of the difference calculator and configured to provide the raw acoustic observation data to the second input; and an output of the difference calculator is coupled to an input of the Error State Kalman filter.

The inertial measurement unit may be algorithmically tightly integrated with the Doppler velocity log measurement unit.

The Doppler velocity log measurement unit may comprise a plurality of acoustic beam projectors and the Doppler velocity log measurement unit may be configured to generate a plurality of beam velocities, respectively; at least one of the plurality of beam velocities may constitute the raw acoustic observation data.

The acoustically aided inertial dead reckoning navigation system may comprise: an Error State Kalman filter; and an initial position input may be operably coupled to the Error State Kalman filter; wherein the Error State Kalman filter may be configured to receive start-up seed position data via the initial position input.

The start-up seed position data may be less accurate than a GNSS current position.

The second position reference system may be a first GNSS system.

The third position reference system may be a second GNSS system.

The acoustically aided inertial dead reckoning navigation system may be configured to generate a measure of quality of the first position data and to enrich the first position data with the measure of quality.

According to a second aspect of the invention, there is provided a method of maintaining station for a vessel, the method comprising: a first position reference system generating first position data; a second position reference system generating second position data; a third position reference system generating third position data; and a controller identifying a position deviation from at least two of the first, second and third position data; the controller generating a vessel movement correction command in response to determination that the position deviation is an unwanted position deviation; the first, second and third position reference systems operating independently of each other; providing an acoustically aided inertial dead reckoning navigation system as the first position reference system; the method characterised by: co-locating an inertial measurement unit of the acoustically aided inertial dead reckoning navigation system with a Doppler velocity log measurement unit and operably coupling the inertial measurement unit to the Doppler velocity log measurement unit; the Doppler velocity log measurement unit generating raw acoustic observation data; the acoustically aided inertial dead reckoning navigation system using the raw acoustic observation data to improve accuracy of position estimates calculated by the inertial navigation unit; and the method further comprising: providing an Error State Kalman filter; providing a difference calculator; and providing a sensor model unit coupled to a first input of the difference calculator; wherein coupling the Doppler velocity log measurement unit to a second input of the difference calculator, the Doppler velocity log unit providing the raw acoustic observation data to the second input of the difference calculator; and coupling an output of the difference calculator to an input of the Error State Kalman filter.

It is thus possible to provide an apparatus and method that employs an acoustically aided inertial navigation system to serve as an independent position reference system, thereby providing an independent position reference system for dynamic positioning in circumstances and/or environments where use of other independent position reference systems are unsuitable and/or undesirable. In this regard, it has been recognised that despite such an accurate instrument being thought of as an absolute positioning instrument, the instrument provides sufficiently accurate dead reckoning without receiving regular position information from a GNSS source of position information. As such, the apparatus and method is not dependent upon a regular source of GNSS data, which can become inaccurate or even unavailable.

At least one embodiment of the invention will now be described, by way of example only, with reference to the accompanying drawings, in which:
**Figure 1** is a schematic diagram of a vessel comprising a vessel station maintenance and control system constituting an embodiment of the invention;
**Figure 2** is a schematic diagram of the vessel station maintenance and control system of Figure 1;
**Figures 3** is a schematic diagram of interfacing between a controller and a position reference source of Figure 2;
**Figure 4** is a schematic diagram of the position reference source of Figure 3 in greater detail; and
**Figure 5** is a flow diagram of a method of maintaining station for a vessel constituting another embodiment of the invention.

Throughout the following description, identical reference numerals will be used to identify like parts.

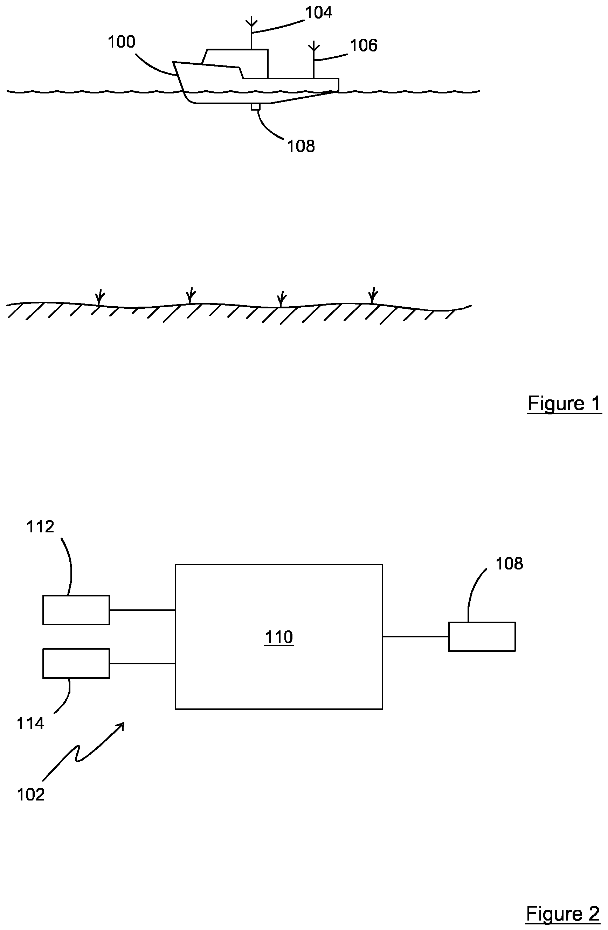

Referring to Figures 1, a vessel 100 comprises a vessel station maintenance and control system 102 (not shown in Figure 1), for example a Dynamic Positioning (DP) system. The vessel 100 is, in this example, disposed in a body of water, for example at sea. The vessel 100 comprises first GNSS antennas 104 mounted on the vessel 100 and second GNSS antennas 106 mounted on the vessel 100. The first and second GNSS antennas 104, 106 are respectively part of independent Differential Global Positioning Systems (DGPS) positioning systems. The vessel 100 also comprises an acoustically aided Inertial Navigation System (INS) instrument 108, for example a SPRINT-Nav^{™} INS available from Sonardyne International Limited, UK. The acoustically aided INS instrument 108, the first DGPS system (not shown in its entirety) and the second DGPS system (also not shown in its entirety) respectively constitute a first position reference system, a second position reference system, and a third position reference system. The DP system 102 of the vessel 100 conforms to Class 3 as defined by the IMO for DP systems and so the first, second and third position reference systems are operationally independent of each other.

The acoustically aided INS instrument 108 is immersed in the water. In this example, the acoustically aided INS instrument 108 is mounted by way of a so-called "over-the-side" mounting pole. Although not shown, the vessel 100 comprises one or more propulsion system and thrusters, which are under the control of the DP system 102. It should, however, be appreciated that other deployment methods can be employed, for example a through-hull instrument deployment unit.

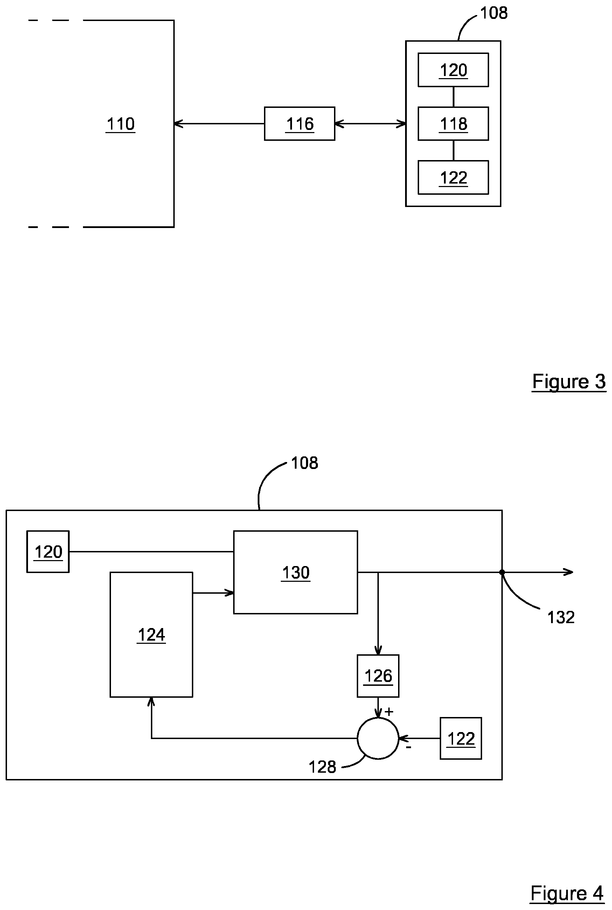

Turning to Figure 2, a DP desk (not shown) comprising a control system, hereinafter referred to as a controller 110, is in this example located on the bridge of the vessel 100 and is operably coupled to the first DGPS system 112, the second DGPS system 114 and the acoustically aided INS instrument 108. Referring to Figure 3, with particular reference to the acoustically aided INS 108, the acoustically aided INS instrument 108 is interfaced with the controller 110 via a first processing resource, for example a navigation computer 116, available from Sonardyne International Limited, UK, the navigation computer 116 running SPRINT^{™} and Janus^{™} software also available from Sonardyne International Limited, UK. As such, the acoustically aided INS instrument 108 is operably coupled to the navigation computer 116 via an Ethernet connection and the navigation computer 116 is operably coupled to the controller 110 via an RS-232 serial connection. The acoustically aided INS instrument 108 comprises a second processing resource 118, for example an embedded processor suitably programmed to implement, inter alia, navigation algorithms, and is operably coupled to an Inertial Measurement Unit (IMU) 120 and a Doppler velocity log measurement unit (or Doppler Velocity Log (DVL) 122). Although not shown, the DVL 122 comprises a plurality of acoustic projectors and is capable of calculating estimated velocities in respect of each acoustic beam generated by the respective projector of the DVL 122 when in use.

Turning to Figure 4, the IMU 120 is operably coupled to a first input of an INS computation unit 130, an output of the INS computation unit 130 being operably coupled to a navigation data output 132 of the acoustically aided INS instrument 108 to provide, when in use, output navigation data generated, the output navigation data being available to the navigation computer 116 and onward to the controller 110. In this example, the second processing resource 118 of the acoustically aided INS instrument 108 implements the INS computation unit 120, as well as an Error State Kalman filer 124, a sensor model 126 and a difference calculator 128, the sensor model 126 having an input operably coupled to the output of the INS computation unit 130 to receive the output navigation data mentioned above. The sensor model 126 comprises an output operably coupled to a first input of the difference calculator 128, the difference calculator 128 having a second input operably coupled to the DVL 122. An output of the difference calculator 128 is operably coupled to an error input of the Error State Kalman filter 124 and a correction output of the Error State Kalman filter 124 is operably coupled to a second, correction, input of the INS computation unit 130.

In this example, only the DVL 122 is described as a sensor source. However, the skilled person will appreciate that other sensors can be employed along with the IMU 120, for example a pressure sensor.

In relation to the acoustically aided INS instrument 108, the algorithmic coupling between the data provided by the DVL 122 and used by the Error State Kalman filter 124 to correct position estimates made by the IMU 120 is categorised as "tight". In this regard, the skilled person should appreciate that instead of just using a computed velocity derived from beam measurements made in respect of all of the acoustic projectors of the DVL 122, the Error State Kalman filter 124 receives acoustic observation data, including quality metrics, for each projector, for example signal-to-noise ratio and/or signal correlation. The skilled person will, however, appreciate that other quality metrics can be employed if desired. These observations generated by the DVL 122 significantly improve the accuracy and reliability of the navigation data calculated by the INS computation unit 130. The raw observation data is not limited to one or more individual beam velocity observations estimated by the DVL 122 and the raw observation data can be lower level, unprocessed, data, which when processed contributes to the DVL 'instrument frame' velocity computed by the DVL 122 mentioned above.

To ensure compatibility with the DP system, the navigation computer 116 is configured to generate alerts concerning the accuracy and integrity of navigation data generated by the acoustically aided INS instrument 108. Furthermore, the navigation computer 116 is configured to provide the alerts in a message format that is compatible with the controller 110. In this regard, the acoustically aided INS instrument 108 is also configured to enrich position data output with accuracy and/or integrity data, for example 2D or 3D estimated position error ellipses.

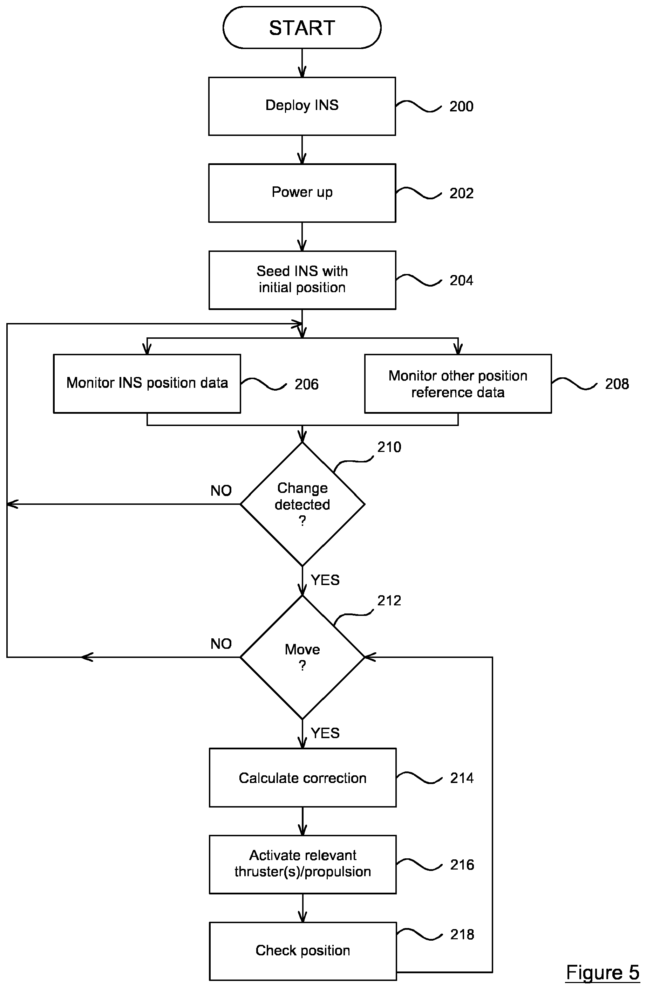

In operation (Figure 5), the acoustically aided INS instrument 108 is deployed (Step 200), for example immersed in water, such as underwater, and the DP system is powered up (Step 202). In this regard, the controller 110, the first DGPS system 112, the second DGPS system 114 are powered up and placed in an operating mode such that the first and second DGPS systems 112, 114 respectively provide the controller 110 with position data on a periodic basis, for example every second. In the case of the acoustically aided INS instrument 108, not only are the navigation computer 116 and the acoustically aided INS instrument 108 powered up, but the acoustically aided INS instrument 108 is also seeded (Step 204) with an initial position, for example an initial GNSS position. In this example, the initial position is introduced into the acoustically aided INS instrument 108 via the difference calculator 128, constituting an initial position input. However, it should be appreciated that initial position can be introduced into the acoustically aided INS instrument 108 at a different point therein.

In this and other examples the initial position need not be accurate, for example less accurate than a GNSS current position. The initial position is provided to the acoustically aided INS instrument 108 via the navigation computer 116 and then the acoustically aided INS instrument 108 sends dead reckoning navigation data to the controller 110 via the navigation computer 116.

The controller 110 is programmed to monitor (Step 206) first position data generated by the acoustically aided INS instrument 108 and to monitor (Step 208) second and third position data respectively generated by the first DGPS system 112 and the second DGPS system 114. The controller 110 continually monitors the first, second and third position data in order to detect (Step 210) a change in position and/or heading of the vessel 100 that might require correcting. The controller 110 implements a voting system such that in the event that movement and/or change in heading of the vessel 100 is consistently identified by changes in two out of the three sources of position reference data, then the controller 110 determines (Step 212) that position and/or heading correction is required and so the controller calculates (Step 214) the correction required to ensure that the vessel 100 maintains station and the controller 110 identifies the propulsion system and/or thrusters that need activation to correct the change. In this regard, the skilled person should appreciate that any suitable technique for processing the data obtained from the independent sources of position reference data can be employed to affect change in the position and/or heading of the vessel 100. In this example, the controller 110 next activates (Step 216) the propulsion system and/or thruster(s) identified. The controller 110 continues to monitor (Step 212 and 218) the position and heading of the vessel 100 in order to determine (Step 212) whether the change has been corrected and continues to activate (Step 216) the propulsion system and/or thruster(s) identified (and any other propulsion system and/or thruster required where a series of manoeuvres is required) until the position and/or heading of the vessel 100 has been corrected. The controller 110 then returns to monitoring the first, second and third position data for further changes in position and/or heading (Steps 206 to 210) that require correction for the vessel 100 to maintain station.

The skilled person should appreciate that the above-described implementations are merely examples of the various implementations that are conceivable within the scope of the appended claims. Indeed, it should be appreciated that although the above DP system employs two independent GNSS position reference systems, one or both position reference systems can be replaced with other kinds of position determination systems if the application environment permits use of such other systems.

## Claims

1. A vessel station maintenance control system (102) comprising:
a first position reference system (108) configured to generate first position data;
a second position reference system (112) configured to generate second position data;
a third position reference system (114) configured to generate third position data; and
a controller (110) operably coupled to the first, second and third position reference systems (108, 112, 114), the controller (110) being configured to identify a position deviation from at least two of the first, second and third position data, and to generate a vessel movement correction command in response to determination that the position deviation is an unwanted position deviation;
the first, second and third position reference systems (108, 112, 114) are operationally independent of each other; **characterised in that**:
the first position reference system (108) is an acoustically aided inertial dead reckoning navigation system comprising an inertial measurement unit (120) co-located with and operably coupled to a Doppler velocity log measurement unit (122), the Doppler velocity log measurement unit (122) being configured to generate raw acoustic observation data;
the acoustically aided inertial dead reckoning navigation system (108) is configured to use the raw acoustic observation data to improve accuracy of position estimates calculated by the inertial measurement unit (120); and
the acoustically aided inertial dead reckoning system (108) further comprises:
an Error State Kalman filter (124);
a difference calculator (128); and
a sensor model unit (126) coupled to a first input of the difference calculator (128); wherein
the Doppler velocity log measurement unit (122) is coupled to a second input of the difference calculator (128) and configured to provide the raw acoustic observation data to the second input; and
an output of the difference calculator (128) is coupled to an input of the Error State Kalman filter (124).

2. A system as claimed in Claim 1, wherein the inertial measurement unit (120) is algorithmically tightly integrated with the Doppler velocity log measurement unit (122).

3. A system as claimed in Claim 1 or Claim 2, wherein the Doppler velocity log measurement unit (122) comprises a plurality of acoustic beam projectors and the Doppler velocity log measurement unit (122) is configured to generate a plurality of beam velocities, respectively, at least one of the plurality of beam velocities constituting the raw acoustic observation data.

4. A system as claimed in any one of the preceding claims, wherein the acoustically aided inertial dead reckoning navigation system (108) comprises:
an initial position input operably coupled to the Error State Kalman filter (124); wherein
the Error State Kalman filter (124) is configured to receive start-up seed position data via the initial position input.

5. A system as claimed in Claim 4, wherein the start-up seed position data is less accurate than a GNSS current position.

6. A system as claimed in any one of the preceding claims, wherein the second position reference system (112) is a first GNSS system.

7. A system as claimed in Claim 6, wherein the third position reference system (114) is a second GNSS system.

8. A system as claimed in any one of the preceding claims, wherein the acoustically aided inertial dead reckoning navigation system (108) is configured to generate a measure of quality of the first position data and to enrich the first position data with the measure of quality.

9. A method of maintaining station for a vessel, the method comprising:
a first position reference system generating first position data;
a second position reference system generating second position data;
a third position reference system generating third position data; and
a controller identifying (Steps 206, 208, 210) a position deviation from at least two of the first, second and third position data;
the controller generating (Step 216) a vessel movement correction command in response to determination that the position deviation is an unwanted position deviation;
the first, second and third position reference systems operating independently of each other;
providing an acoustically aided inertial dead reckoning navigation system as the first position reference system; the method being **characterised by**:
co-locating an inertial measurement unit of the acoustically aided inertial dead reckoning navigation system with a Doppler velocity log measurement unit and operably coupling the inertial measurement unit to the Doppler velocity log measurement unit;
the Doppler velocity log measurement unit generating raw acoustic observation data;
the acoustically aided inertial dead reckoning navigation system using the raw acoustic observation data to improve accuracy of position estimates calculated by the inertial navigation unit; and
the method further comprising:
providing an Error State Kalman filter (124);
providing a difference calculator (128); and
providing a sensor model unit (126) coupled to a first input of the difference calculator (128); wherein
coupling the Doppler velocity log measurement unit (122) to a second input of the difference calculator (128), the Doppler velocity log unit (122) providing the raw acoustic observation data to the second input of the difference calculator (128); and
coupling an output of the difference calculator (128) to an input of the Error State Kalman filter (124).

## Patentansprüche

1. Positionshaltesteuerungssystem (102) für Schiffe, umfassend:
ein erstes Positionsreferenzsystem (108), das zum Erzeugen erster Positionsdaten konfiguriert ist;
ein zweites Positionsreferenzsystem (112), das zum Erzeugen zweiter Positionsdaten konfiguriert ist;
ein drittes Positionsreferenzsystem (114), das zum Erzeugen dritter Positionsdaten konfiguriert ist; und
eine Steuereinheit (110), die funktionsfähig mit dem ersten, zweiten und dritten Positionsreferenzsystem gekoppelt ist (108, 112, 114),
wobei die Steuerung (110) so konfiguriert ist, dass sie eine Positionsabweichung von mindestens zwei der ersten, zweiten und dritten Positionsdaten identifiziert und einen Befehl zur Korrektur einer Schiffsbewegung als Reaktion auf die Feststellung, dass es sich bei der Positionsabweichung um eine unerwünschte Positionsabweichung handelt, erzeugt;
wobei das erste, zweite und dritte Positionsreferenzsystem (108, 112, 114) voneinander unabhängig arbeiten;
**dadurch gekennzeichnet, dass**:
das erste Positionsreferenzsystem (108) ein akustisch unterstütztes inertiales Koppelnavigationssystem ist, das eine Trägheitsmesseinheit (120) umfasst, die sich am selben Ort wie eine Doppler-Geschwindigkeitsmessvorrichtung (122) befindet und mit dieser funktionsfähig gekoppelt ist,
wobei die Doppler-Geschwindigkeitsmessvorrichtung (122) so konfiguriert ist, dass sie akustische Rohbeobachtungsdaten erzeugt;
das akustisch unterstützte inertiale Koppelnavigationssystem (108) so konfiguriert ist, dass es die akustischen Rohbeobachtungsdaten verwendet, um die Genauigkeit der von der Trägheitsmesseinheit (120) berechneten Positionsschätzungen zu verbessern;
und das akustisch unterstützte inertiale Koppelnavigationssystem (108) ferner umfasst:
ein Fehlerzustands-Kalman-Filter (124);
ein Differenzrechner (128); und
eine Sensormodelleinheit (126), die mit einem ersten Eingang des Differenzrechners (128) gekoppelt ist; wobei
die Doppler-Geschwindigkeitsmessvorrichtung (122) mit einem zweiten Eingang des Differenzrechners (128) gekoppelt und so konfiguriert ist, dass sie die akustischen Rohbeobachtungsdaten an den zweiten Eingang liefert; und ein Ausgang des Differenzrechners (128) mit einem Eingang des Fehlerzustands-Kalman-Filters (124) gekoppelt ist.

2. System nach Anspruch 1, wobei die Trägheitsmesseinheit (120) algorithmisch eng mit der Doppler-Geschwindigkeitsmessvorrichtung (122) integriert ist.

3. System nach Anspruch 1 oder 2, wobei die Doppler-Geschwindigkeitsmessvorrichtung (122) mehrere akustische Strahlprojektoren umfasst und die Doppler-Geschwindigkeitsmessvorrichtung (122) so konfiguriert ist, dass sie mehrere Strahlgeschwindigkeiten erzeugt, wobei mindestens eine der mehreren Strahlgeschwindigkeiten die akustischen Rohbeobachtungsdaten bildet.

4. System nach einem der vorstehenden Ansprüche, wobei das akustisch unterstützte inertiale Koppelnavigationssystem (108) umfasst:
eine Anfangspositionseingabe, die funktionsfähig mit dem Fehlerzustands-Kalman-Filter (124) gekoppelt ist;
wobei der Fehlerzustands-Kalman-Filter (124) so konfiguriert ist, dass er Start-Seed-Positionsdaten über die Anfangspositionseingabe empfängt.

5. System nach Anspruch 4, wobei die Start-Seed-Positionsdaten weniger genau sind als eine aktuelle GNSS-Position.

6. System nach einem der vorstehenden Ansprüche, wobei das zweite Positionsreferenzsystem (112) ein erstes GNSS-System ist.

7. System nach Anspruch 6, wobei das dritte Positionsreferenzsystem (114) ein zweites GNSS-System ist.

8. System nach einem der vorstehenden Ansprüche, wobei das akustisch unterstützte inertiale Koppelnavigationssystem (108) so konfiguriert ist, dass es ein Maß für die Qualität der ersten Positionsdaten erzeugt und die ersten Positionsdaten mit dem Maß für die Qualität anreichert.

9. Verfahren zum Halten einer Position für ein Schiff, wobei das Verfahren umfasst:
ein erstes Positionsreferenzsystem, das erste Positionsdaten erzeugt;
ein zweites Positionsreferenzsystem, das zweite Positionsdaten erzeugt;
ein drittes Positionsreferenzsystem, das dritte Positionsdaten erzeugt; und
eine Steuereinheit, die eine Positionsabweichung von mindestens zwei der ersten, zweiten und dritten Positionsdaten identifiziert (Schritte 206, 208, 210);
wobei die Steuereinheit einen Befehl zur Korrektur einer Schiffsbewegung als Reaktion auf die Feststellung (Schritt 216), dass es sich bei der Positionsabweichung um eine unerwünschte Positionsabweichung handelt, erzeugt;
wobei das erste, zweite und dritte Positionsreferenzsystem unabhängig voneinander arbeiten;
Bereitstellen eines akustisch unterstützten inertialen Koppelnavigationssystems als erstes Positionsreferenzsystem; wobei das Verfahren **gekennzeichnet ist durch**:
das gemeinsame Anordnen einer Trägheitsmesseinheit des akustisch unterstützten inertialen Koppelnavigationssystems mit einer Doppler-Geschwindigkeitsmessvorrichtung und das funktionsfähige Koppeln der Trägheitsmesseinheit mit der Doppler-Geschwindigkeitsmessvorrichtung;
die Doppler-Geschwindigkeitsmessvorrichtung erzeugt akustische Rohbeobachtungsdaten;
das akustisch unterstützte inertiale Koppelnavigationssystem verwendet die akustischen Rohbeobachtungsdaten, um die Genauigkeit der von der Trägheitsnavigationseinheit berechneten Positionsschätzungen zu verbessern; und
das Verfahren ferner umfasst:
Bereitstellen eines Fehlerzustands-Kalman-Filters (124);
Bereitstellen eines Differenzrechners (128); und
Bereitstellen einer Sensormodelleinheit (126), die mit einem ersten Eingang des Differenzrechners (128) gekoppelt ist;
wobei die Kopplung der Doppler-Geschwindigkeitsmessvorrichtung (122) mit einem zweiten Eingang des Differenzrechners (128) erfolgt, wobei die Doppler-Geschwindigkeitsmessvorrichtung (122) die akustischen Rohbeobachtungsdaten an den zweiten Eingang des Differenzrechners (128) liefert;
und Verbinden eines Ausgangs des Differenzrechners (128) mit einem Eingang des Fehlerzustands-Kalman-Filters (124).

## Revendications

1. Un système de contrôle de maintenance de station de navire (102) comprenant :
un premier système de référence de position (108) configuré pour générer des premières données de position
un deuxième système de référence de position (112) configuré pour générer des deuxièmes données de position ;
un troisième système de référence de position (114) configuré pour générer des troisièmes données de position ; et
un contrôleur (110) couplé de manière opérable aux premier, deuxième et troisième systèmes de référence de position (108, 112, 114), le contrôleur (110) étant configuré pour identifier une déviation de position à partir d'au moins deux des premières, deuxièmes et troisièmes données de position, et pour générer une commande de correction de mouvement du navire en réponse à la détermination que la déviation de position est une déviation de position indésirable ;
les premier, deuxième et troisième systèmes de référence de position (108, 112, 114) sont opérationnellement indépendants les uns des autres ; **caractérisé en ce que** :
le premier système de référence de position (108) est un système de navigation inertielle assistée acoustiquement comprenant une unité de mesure inertielle (120) co-localisée avec et couplée de manière opérable à une unité de mesure de vitesse Doppler (122), l'unité de mesure de vitesse Doppler (122) étant configurée pour générer des données d'observation acoustique brutes ;
le système de navigation inertielle assistée acoustiquement (108) est configuré pour utiliser les données d'observation acoustique brutes afin d'améliorer la précision des estimations de position calculées par l'unité de mesure inertielle (120) ; et
le système de navigation inertielle assistée acoustiquement (108) comprend en outre :
un filtre de Kalman d'état d'erreur (124) ;
un calculateur de différence (128) ; et
une unité de modèle de capteur (126) couplée à une première entrée du calculateur de différence (128) ; où
l'unité de mesure de vitesse Doppler (122) est couplée à une deuxième entrée du calculateur de différence (128) et configurée pour fournir les données d'observation acoustique brutes à la deuxième entrée ; et
une sortie du calculateur de différence (128) est couplée à une entrée du filtre de Kalman d'état d'erreur (124).

2. Un système selon la revendication 1, dans lequel l'unité de mesure inertielle (120) est intégrée de manière algorithmique avec l'unité de mesure de vitesse Doppler (122).

3. Un système selon la revendication 1 ou la revendication 2, dans lequel l'unité de mesure de vitesse Doppler (122) comprend une pluralité de projecteurs de faisceau acoustique et l'unité de mesure de vitesse Doppler (122) est configurée pour générer une pluralité de vitesses de faisceau, respectivement, au moins une des pluralités de vitesses de faisceau constituant les données d'observation acoustique brutes.

4. Un système selon l'une quelconque des revendications précédentes, dans lequel le système de navigation inertielle assistée acoustiquement (108) comprend :
une entrée de position initiale couplée de manière opérable au filtre de Kalman d'état d'erreur (124) ; dans lequel
le filtre de Kalman d'état d'erreur (124) est configuré pour recevoir des données de position de départ via l'entrée de position initiale.

5. Un système selon la revendication 4, dans lequel les données de position de départ sont moins précises qu'une position actuelle GNSS.

6. Un système selon l'une quelconque des revendications précédentes, dans lequel le deuxième système de référence de position (112) est un premier système GNSS.

7. Un système selon la revendication 6, dans lequel le troisième système de référence de position (114) est un deuxième système GNSS.

8. Un système selon l'une quelconque des revendications précédentes, dans lequel le système de navigation inertielle assistée acoustiquement (108) est configuré pour générer une mesure de qualité des premières données de position et enrichir les premières données de position avec la mesure de qualité.

9. Un procédé de maintien de station pour un navire, le procédé comprenant :
un premier système de référence de position générant des premières données de position ;
un deuxième système de référence de position générant des deuxièmes données de position ;
un troisième système de référence de position générant des troisièmes données de position ; et
un contrôleur identifiant (Étapes 206, 208, 210) une déviation de position à partir d'au moins deux des premières, deuxièmes et troisièmes données de position ;
le contrôleur générant (Étape 216) une commande de correction de mouvement du navire en réponse à la détermination que la déviation de position est une déviation de position indésirable ;
les premier, deuxième et troisième systèmes de référence de position fonctionnant indépendamment les uns des autres ;
fournir un système de navigation inertielle assistée acoustiquement comme premier système de référence de position ; le procédé étant **caractérisé par** :
co-localiser une unité de mesure inertielle du système de navigation inertielle assistée acoustiquement avec une unité de mesure de vitesse Doppler et coupler de manière opérable l'unité de mesure inertielle à l'unité de mesure de vitesse Doppler ;
l'unité de mesure de vitesse Doppler générant des données d'observation acoustique brutes ;
le système de navigation inertielle assistée acoustiquement utilisant les données d'observation acoustique brutes pour améliorer la précision des estimations de position calculées par l'unité de mesure inertielle ; et
le procédé comprenant en outre :
fournir un filtre de Kalman d'état d'erreur (124) ;
fournir un calculateur de différence (128) ; et
fournir une unité de modèle de capteur (126) couplée à une première entrée du calculateur de différence (128) ; où
coupler l'unité de mesure de vitesse Doppler (122) à une deuxième entrée du calculateur de différence (128), l'unité de mesure de vitesse Doppler (122) fournissant les données d'observation acoustique brutes à la deuxième entrée du calculateur de différence (128) ; et
coupler une sortie du calculateur de différence (128) à une entrée du filtre de Kalman d'état d'erreur (124).
